Europäisches Patentamt

(19) European Patent Office

Office européen des brevets

(11) Publication number : **0 501 816 A2**

# EUROPEAN PATENT APPLICATION

(21) Application number : 92301704.0

(22) Date of filing : 28.02.92

(51) Int. Cl.$^5$ : **G01N 31/12, B01J 19/12**

(30) Priority : **01.03.91 US 662915**

(43) Date of publication of application :
**02.09.92 Bulletin 92/36**

(84) Designated Contracting States :
**CH DE FR GB IT LI**

(71) Applicant : **CEM Corporation**
**3100 Smith Farm Road**
**Matthews North Carolina 28105 (US)**

(72) Inventor : **Revesz, Robert N.**
**711 Windingbrook Road**
**Monroe, North Carolina 28110 (US)**
Inventor : **Thomas, James E.**
**2536 Arnold Drive**
**Monroe, North Carolina 28110 (US)**

(74) Representative : **Pacitti, Pierpaolo A.M.E. et al**
**Murgitroyd and Company Mitchell House 333**
**Bath Street**
**Glasgow G2 4ER Scotland (GB)**

(54) Process for manufacture of ashing containers.

(57) Ashing containers which are useful for ashing analytic samples in microwave heated furnaces or muffle furnaces, and which are heat resistant, walled, light in weight, microwave transmissive and porous, are manufactured by a process in which quartz microfibers are suspended in water, deposited on a foraminous form to produce a container shape, dried, using vacuum and heating, removed from the form and sintered to final form retaining shape. The ashing containers made are capable of being used repeatedly in ashings effected at temperatures of about 1,000°C. The ashing containers, being light in weight, facilitate accurate weighings of ash produced, and the containers heat up and cool down quickly. Additionally, they can be used for analysis of flours, in which ethanolic solutions of magnesium acetate are flamed, without necessitating separate flaming operations to avoid explosive combustions and losses of sample or ash. The invented processes can also be used to make similar containers of borosilicate glass useful as containers for materials to be heated to relatively high temperatures.

FIG. 1

This application relates to a process for manufacturing ashing containers, which are useful for holding analytic samples that are to be ashed, as a step in an analysis of such materials. More particularly, the invention is of a process for making such ashing containers by depositing quartz microfibers on a form and sintering them to form retaining state.

Microwave heating apparatuses have been employed in analytical operations and they often were found preferable to conventional analytical operations involving heating of samples of materials because they are faster, and sometimes because they do not require externally applied heat to pass through relatively poorly conducting container walls. Microwave ashing apparatuses have been made, such as those of U.S. patent 4,565,669, in which a fibrous quartz paper or sheet material was employed to support a sample of material to be ashed, as a part of an analysis thereof. In S.N. 07/298,553 one of the present inventors described an ashing container made of quartz fibers and also described a procedure for making such containers. The present invention is an improvement over the process of that application and results in an improved container, without seams or overlaps, which can be made by a more efficient, faster, more economical and less labor intensive process, which results in uniform seamless containers that will be longer lasting during repeated ashing operations.

It is known that paper has been made by depositing cellulose fibers from a pulp suspension onto a continuously moving shaking screen, as in a Foudrinier machine. Also, papier mache items have been made from paper pulps, which harden to form retaining state when dried. However, applicants do not know of any processes by which form retaining containers were made from quartz microfibers that were deposited on a form, preferably from an aqueous suspension thereof, and were subsequently sintered to form retaining state, while still remaining porous and light in weight due to their essentially microfibrous structure.

In accordance with the present invention a process for manufacturing ashing containers, useful in ashing of analytic samples, which containers are heat resistant, form retaining, walled, light in weight and porous, comprises depositing quartz or borosilicate glass microfibers on a form of a shape like that of the desired container, heating such microfibers to a sintering temperature, at which they become sintered together to form such form retaining container, and cooling the container. Very preferably the process will be used to make microfibrous quartz ashing containers which are microwave transmissive and of greater high temperature resistance than borosilicate glass, and which are particularly suitable for use in an ashing furnace that is heated by microwave radiation. Also preferably, the process will be used to make ashing containers of substantially flat cylindrical shape, the employed microfibers will be deposited from an aqueous suspension onto a screen shaped like the desired container, the container so resulting will be dried by means of vacuum and heat, and the container, removed from the form, will be sintered to permanent shape. Additionally, the process may be employed to make containers of borosilicate or other glasses, in which materials may be sintered at and, in use, heated to temperatures lower than those at which ashing is effected.

The invention will be readily understood by reference to the accompanying description, taken in conjunction with the drawing, in which:

FIG. 1 is a front perspective view of a microwave furnace apparatus in which the illustrated shaped but not form retaining containers are sintered to form retaining state;

FIG. 2 is a front perspective view of the finished ashing container;

FIG. 3 is a partially cutaway front perspective view of an apparatus that is usable for depositing quartz microfibers onto inverted forms shaped like the desired container;

FIG. 4 is a partially disassembled perspective view of a plurality of forms onto which quartz microfibers are to be deposited from aqueous suspension, illustrating one of the continuous annular flanges detached from position in contact with the flange of its matching form;

FIG. 5 is a disassembled view of the near right portion of the assembly of FIG. 4, illustrating the relationships of the base, packing, screen form and ring thereof; and.

FIG. 6 is a representation of the assembly of FIG. 4, after deposition on the forms thereof of the quartz microfibers, being subjected to vacuum to remove water from the quartz microfibers of the container walls and bottoms.

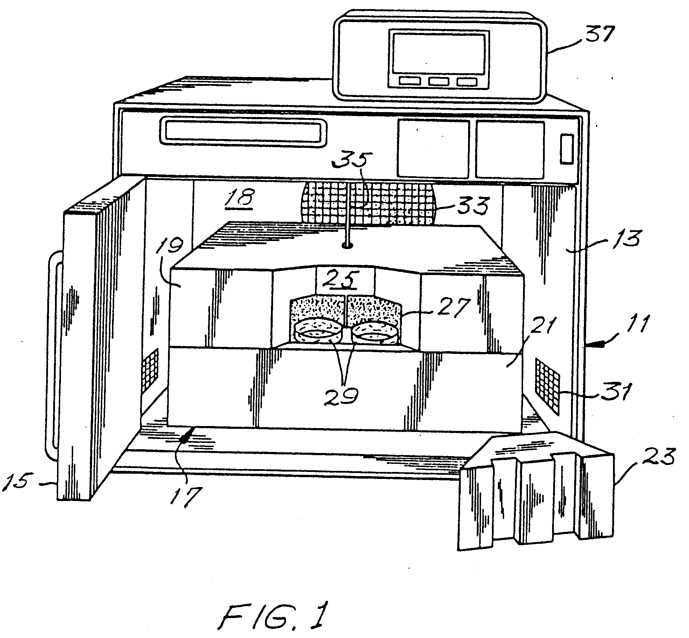

In FIG. 1 a microwave ashing apparatus 11 comprises top, bottom, side and rear walls, all designated by numeral 13, applied to a side wall, and door 15, which define a microwave retaining chamber 18. Inside the chamber is a furnace 17, which includes top and bottom portions 19 and 21, and a furnace door 23. Such furnace parts are made of microwave transmissive open celled quartz, which is of low thermal conductivity and is heat resistant, capable of being employed at very high temperatures without deterioration. Inside the furnace is a cavity 25 and microwave absorptive material 27 is located in grooves or slots (not shown) in the upper and lower portions 19 and 21, with surfaces thereof even with the internal surfaces that define the furnace cavity. In the furnace cavity are shown two of the ashing containers made by the process of the present invention, each of which is identified by numeral 29. Also shown in FIG. 1 are inlets 31 for air to enter the chamber, part of which air will pass through the furnace cavity, but most of which passes around chamber 18 and serves to cool the walls of such chamber. Such air then exits the chamber through outlet 33. A thermocouple 35 is located in the furnace cavity and is communicated by means of a connector (not illustrated) to temperature controller 37, which controls the temperature in the furnace and thereby controls the temperature of sintering for the invented manufacturing process, as well as the operating temperature for ashings of analytical samples. Both the main microwave generator of apparatus 11 and the temperature controller 37 include controls and visual displays, which are readily apparent and therefore are not specifically numbered.

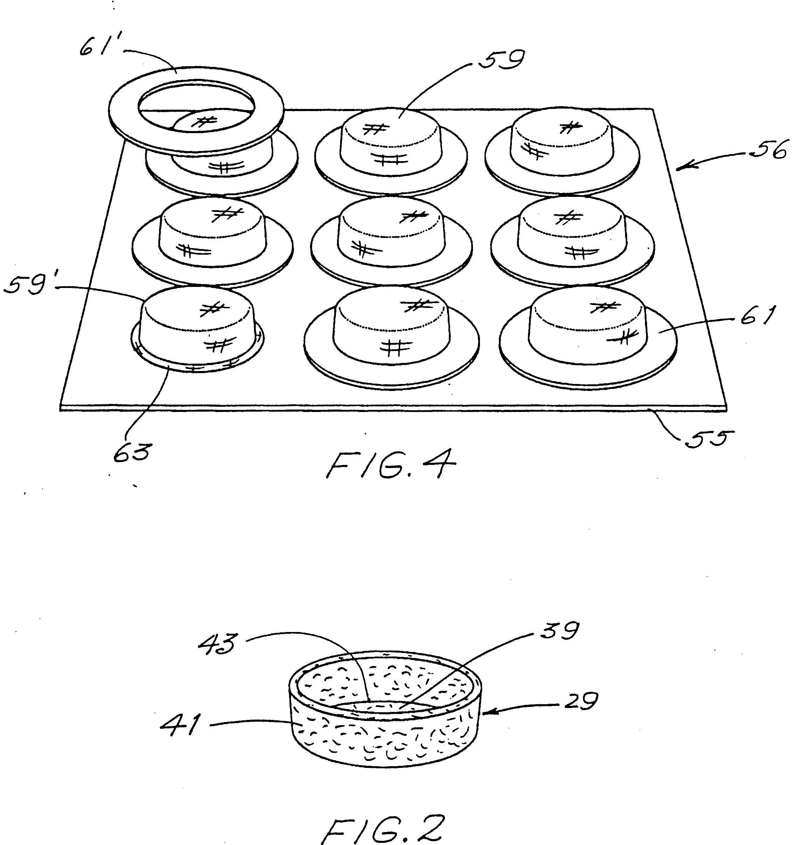

In FIG. 2 ashing container 29 includes bottom and side portions 39 and 41, respectively, which are of substantially equal thicknesses, and which are seamless. Line of division 43 is not a sharp line but is like a fillet, which construction thereby decreases any strains on the container due to repeated heatings to high temperatures and coolings.

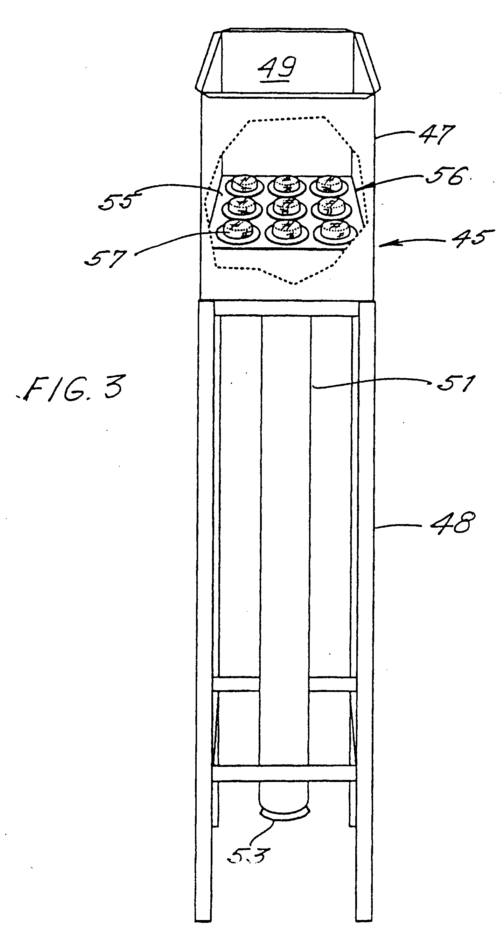

FIG. 3 illustrates an apparatus for manufacturing "green" or unsintered containers from the microfibrous quartz, which containers, upon later sintering, will become form retaining ashing containers, suitable for use in ashing operations. Such apparatus may be referred to as a fiber depositing, forming or molding apparatus, and in it quartz microfibers, in suspension in a liquid medium, are deposited on foraminous forms or molds as the liquid of such a suspension is drawn through the foramina of the forms. Forming apparatus 45 includes a chamber 47 which is defined by side walls 49 and a bottom, not specifically shown, in which bottom there is a drain opening, not specifically illustrated, through which liquid may be drained from chamber 47 via drain pipe 51, which is sealable by stopper 53. Chamber 47 is free standing and is held at a convenient working height by a suporting structure 48. The apparatus illustrated is an initial version thereof that was employed in the laboratory to make the present ashing containers. Commercial apparatuses will include valves, agitators, pumps, etc., so as to make most effective use of the microfibrous quartz suspension and produce the best evenly deposited containers of superior characteristics for ashing, drying and other heating uses.

Inside chamber walls 49 are flanges, not shown, which support plate 55 of mold assembly 56, on which plate are mounted forms 57. Details of the mold assembly are shown in FIG's. 4 and 5. Note that the plate extends to the interior walls of chamber 47.

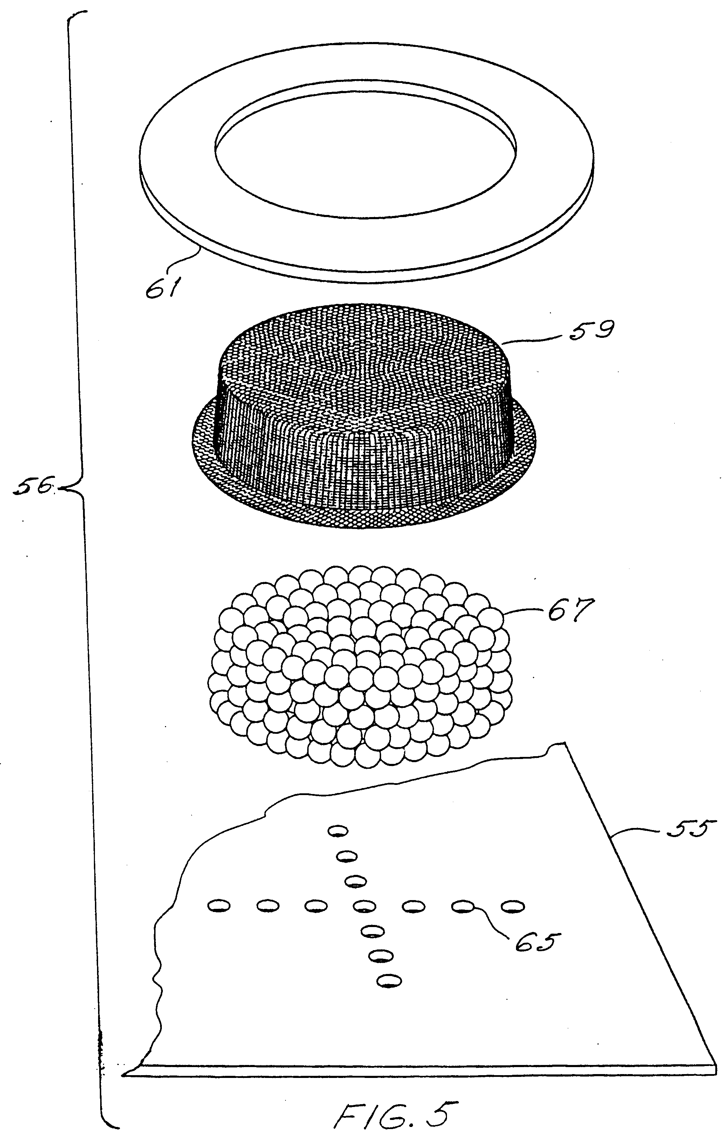

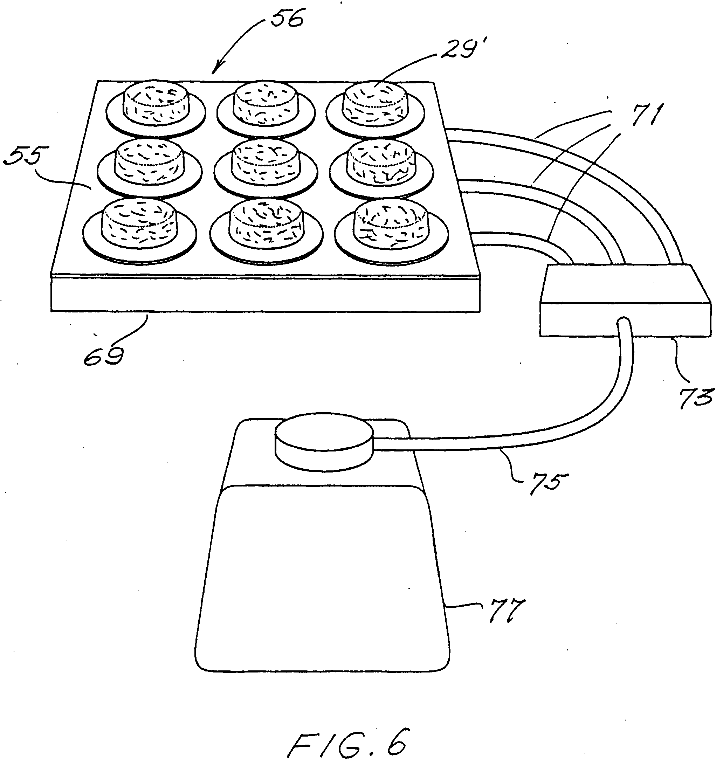

In FIG. 4 mold assembly or form assembly 56 is illustrated, which includes support plate or base member 55, foraminous form members 59 and annular or perimetric plates or flat rings 61. One such ring 61' is shown detached from its normal position so as to illustrate the presence on form 59' of a flange portion 63, by which the form member 59 is held to plate 55 by ring 61. It will be noted that in FIG's. 3 and 4 the foraminous or screen structure of the form is not completely shown, as it is in FIG. 5, but it should be understood that it is like that shown in FIG. 5, or of equivalent foraminous structure.

The disassembled view of the components of the mold assembly, FIG. 5, includes support plate 55, with holes or passages 65 therein, and form maintaining packing 67, with interstitial passages through it, not specifically shown, which packing, in the illustration, is of glass beads, and helps to maintain the desired flat cylindrical shape of form 59, which is made of a wire screen. Instead of the screen one may employ a sintered metal or vitreous (glass) frit form, which is stronger than screening and which obviates any need for packing to help support it. Also included in the form assembly 56 is ring 61, which holds the form member 59 to plate 61 and assists in removal of the formed microfibrous quartz container from form 59 when the ring 61 is lifted, after deposition of the microfibers on the form and on an adjacent part of the ring.

In FIG. 6 there is shown mold assembly 56, with the formed but unsintered microfibrous quartz containers 29' over be foraminous forms thereof, positioned on a vacuum box 69, which includes passageways therein, not illustrated, which communicate with the passageways 65 (see FIG. 5) in support plate 55 and through such, the interstitial openings in the packings and the formina in the screens, with the containers 29', so as to remove water from them. As illustrated, vacuum box 69 is communicated by hoses 61 with vacuum manifold 73 and hose or line 75 to a source of vacuum, such as vacuum pump 77.

The ashing containers made by the invented process are preferably of essentially flat cylindrical shape, although other shapes may also be made. The containers will normally be of very uniform wall thicknesses for both side walls and bottom portions, with such thicknesses normally being in the range of 0.2 to 5 mm. thick, preferably 0.3 to 4 mm., e.g., 2 or 3 mm. thick. The container will usually measure 2 to 10 cm. in diameter, preferably 4 to 6 cm., and 0.5 to 4 cm. high, preferably 1 to 2 cm. high, e.g., 4.7 cm. in diameter by 1.5 cm. in height. The ratio of height to diameter (or to major horizontal dimension) will normally be less than 1:1 and preferably will not be more than 1:2. A preferred such ratio will be in the range of 1:2 to 1:10, preferably 1:2 to 1:5, e.g., about 1:3. The density of the wall material (measured in grams per meter of one surface, considering the container to be laid out in a plane, like a pattern) will be in the range of 50 to 500 g./sq. m. or 0.02 to 0.25 g./cc., preferably 100 to 300 g./sq. m. or 0.04 to 0.25 g./cc.

The container wall and bottom will be porous, so as to absorb and distribute any liquids of low viscosity and low surface tension over the surfaces thereof, which facilitates even evaporation, combustion and ashing, and also promotes air movement through the container walls, to facilitate oxidation and ashing. Porosity may be measured by pressure drop through the wall material at a certain velocity of air, and in the present case it is found that good porosity results when the pressure drop is in the range of 0 to 10 mm. of mercury at an air velocity of about 1 to 10 cm./sec., e.g., 3 mm. Hg at 1 cm./sec. through a 2 mm. wall and 6 mm. of Hg at 1 cm./sec. through a 3 cm. wall. However, similar pressure drops are also sometimes obtainable when the air velocity is increased to 5 or even 10 cm./sec., indicating improved air permeability.

To manufacture the described ashing containers by the present invention is comparatively simple. First, the microfibrous quartz is obtained, which is in the micron range of fiber thickness or diameter. Usually such quartz microfibers are of average or absolute diameters in the range of 0.2 to 7 microns, preferably 0.2 to 2 microns, such as about 0.65 micron, with a length/diameter ratio that will usually be greater than 10:1 and sometimes may even be greater than 100:1. Suitable L/D rates are in the range of 10:1 to 1,000:1, such as 10:1 to 100:1. It is considered that the high L/D ratio is contributory to the desired sintering of the container during processing according to the invention, and helps to make the container produced one which is form retaining and resistant to degradation during heatings to higher temperatures. Quartz microfibers of the type useful in the practice of this invention are described in a bulletin issued by Mansville Sales Corporation, Toledo, Ohio, which is entitled Tempstran® Glass Micro-fiber, which is marked as effective April 1, 1989. In such bulletin there are described glass microfibers but it is understood that fibers of the same measurements are available which are made from quartz, with the code designations being changed only by addition of Q as a suffix to the glass codes. Reported in the bulletin are microfibers of nominal diameters in the range of 0.3 to 5.5 microns and of surface areas of 0.3 to 6 square meters per gram. While any of these microfibrous materials can be used (very preferably made of quartz), it is preferred to employ the one designated 106-Q, which is of a nominal diameter of 0.65 micron. A preferred diameter range is 0.5 to 1 micron, nominal.

To make the present containers, of the type illustrated in FIG's. 1 and 2, by the invented process one first preferably makes a mix or slurry of the microfibrous quartz of the type described in water or other suitable liquid medium. While water is preferred,other volatile liquids, such as solvents, e.g., ethanol, aqueous isopropanol, and other known readily evaporable liquids, may be employed. The microfibrous quartz is dispersed in the liquid medium, preferably at a concentration in the range of about 0.5 to 20 g./l. and the mix is subjected to mixing in a mixer, like a household blender, at medium speed. The molding apparatus (FIG. 3) then has the form assembly installed, as in FIG. 3, after which it is filled with water to a level 10 cm. above the support plate, which takes about fifteen liters, followed by addition with stirring of the microfibrous quartz slurry or suspension, yielding a dispersion of the microfibrous quartz in water of about 1 g./l. (but 0.1 to 10 or 0.5 to 2 g./l, are operative ranges, too, and other concentrations outside such ranges may also be operative in some circumstances, as when different microfibrous quartz is employed). Next, the stopper (53 of FIG. 3) is removed from the drain (51 of FIG. 3) or an appropriate valve is opened, and the slurry drains or is pumped through the foraminous form, packing, drain holes and drain, leaving the microfibrous quartz behind on the foraminous form (copper screen of No. 40 to 150, U.S. Sieve Series, preferably No. 60), in the form of a "green" molded container. When a pump is employed the drained water may be recirculated to an elevated storage tank and may be reused. The mold assembly is then removed from the forming apparatus and is placed on the vacuum box and excess water is removed from the green container by vacuum (such as 50 to 300 mm. of Hg or more for from 20 seconds to five minutes, e.g., one minute. Up to this point all operations have been conducted at room temperature (20 - 30°C.) but more water is next removed by heating the green container, while still on the forming apparatus, in a convection oven,to a temperature of about 100°C. for 2 to 10 minutes, e.g., 5 minutes. At this point, after cooling of the green containers on the molding apparatus, the rings 61 are lifted and the green containers, free of the foraminous forming means, are returned to the oven for more heating (5 to 30 minutes, e.g., 15 minutes) to remove any last traces of water. Then the containers are sintered in a microwave furnace at a temperature in the range of 800 to 1,000°C. over a period of 2 to 20 minutes, e.g., 10 minutes.

Instead of employing multiple steps to remove water from be green molded containers, while they are still on the forms, one may rely on heat alone to effect such removal. However, it is considered that the application of vacuum to the molded containers, while they are on the forms, promotes formation of tight, yet porous, form retaining containers, and therefore is desirable. In other variations of the invention the slurry of microfibrous quartz may be poured over the forms or the microfibers may be deposited from a slurry without first adding water to the mold assembly and the mold assembly may be located nearer to the bottom of the forming apparatus chamber, to thereby limit the amount of microfibers not capable of desired depositions on the forms. Instead of passing the suspension of the microfibers through the form the form may be passed through the suspension, and instead of the procedure being a batch operation it may be made continuous, with the central principle being that the microfibers are deposited on a foraminous form from a liquid dispersion thereof and are subsequently sintered to form retaining state to make the ashing containers that withstand multiple high temperature uses. In a final variation of the invention instead of making quartz microfibrous containers such containers may be made of borosilicate glass (Pyrex® or Vycor®) or other high temperature glasses but the properties of such (heat resistance and microwave transmission) may not be as satisfactory. In some instances ordinary glass in microfiber form may be employed but the containers made will be employed in lower temperature operations, such as heatings and dryings.

The following examples illustrate but do not limit the invention. Unless otherwise indicated all parts in the examples and in this specification and the claims are by weight and all temperatures are in °C.

EXAMPLE 1

A forming apparatus, like that illustrated in FIG. 3, is set up, together with auxiliary equipment employed in manufacturing ashing containers by the invented process. The forming apparatus includes a mold assembly like that depicted in FIG's. 4 and 5, including nine No. 60, U.S. Sieve Series copper screen forms in the desired shape of the ashing container to be made, each of which is held to a metal (steel) support plate, which includes the indicated plurality of 2.4 mm. diameter holes through it under the screen forms. The forms are slightly tapered to promote removal from them of the ashing containers after drying thereof. Before the forms are fastened to the support plate they are filled with 2.3 mm. diameter glass beads, which stabilize the forms and provide interstitial passageways for water or other liquid medium for the microfibrous quartz dispersion to drain off. The support plate employed in this particular example measures 25 cm. by 25 cm. and is 3.2 mm. thick but it is evident that the size of the support plate and of the forming apparatus may be changed and the number of forms may be changed too (as from 1 to 100) and the cross-section shape may be changed (as to circular), when desirable and feasible. The metal ring about the form, which is used to facilitate removal of the "green" molded container after it is dried, is of 4.6 cm. inside diameter and 7.4 outside diameter measurements. The apparatus described is designed to make ashing containers that measure 4.7 cm. outside diameter, 2 mm, in thickness, and 1.5 cm. in depth, which weigh about 0.75 gram.

The forming apparatus chamber is defined by metal walls that form an open top chamber that communicates at the bottom thereof with a drain pipe. The chamber measures 26.7 cm. by 26.7 cm. by 30.5 cm. deep. On the inside of the chamber walls, 20.3 cm. down from the top, there are attached flange members which are 2.5 cm. wide, which support the form assembly.

The vacuum box, illustrated in FIG. 6, is a plastic plate, made of polypropylene, nylon, polymethyl methacrylate or other suitable plastic, or of metal or alloy, such as stainless steel, which measures 26.7 cm. by 26.7 cm. by 25 mm., with holes drilled into it to make passageways for vacuum communication from a source of vacuum, such as a vacuum pump, to surface locations under the green containers in positions on the forms, so that the applied vacuum can help to remove excess water from the green containers and can assist in drawing the container fibers together to make stronger container walls and bottoms. The pump can draw a vacuum of up to 740 mm. of mercury but normally that high a vacuum needs not be applied.

The oven that is employed to dry the newly molded and still wet containers while they are still on the mold assembly, and after removal, is a forced air commercial oven with an interior cavity measuring 25.4 cm. by 25.4 cm. by 33.0 cm. and it is capable of maintaining a temperature of 100°C. The furnace employed to sinter the container microfibers may be any suitable such furnace that is capable of reaching a temperature in the sintering range and usually will be able to maintain a temperature in the furnace of 1,000°C. For this example, such furnace can be a microwave heated furnace like that of FIG. 1, which can also be employed for ashing operations. However, electrical resistance and gas fired furnaces and heaters can also be employed.

Another piece of equipment that is utilized in the invented process is a mixer or blender. Although commercial blenders will be employed for commercial manufacturing, in the essentially laboratory type manufacturing process described a normal household type of Osterizer® blender sufficed.

To begin the process for making the ashing containers, after assembly of the forming apparatus it is filled with water to a height above the upper part of the form, in this case to 10.0 cm. above the support plate. This is done so that when the dispersion of microfibrous quartz is added to the apparatus it will not immediately drain through the forms, which could produce containers of irregular thicknesses. Instead, by having the lower volume of the apparatus full of liquid the liquid inhibits downward flow of the medium of the microfibrous quartz dispersion and allows the operator to control the rate of deposition, by controlling the flow rate of the exiting liquid from the apparatus.

Next, a dispersion of 8 grams of microfibrous quartz (Manville Tempstran® 106-Q, which is of a nominal microfiber diameter of 0.65 micron) is admixed with 1.5 liters of water in an Osterizer blender of such capacity, at the "mix" setting. Such mixing is continued for six minutes and the dispersion resulting is then poured into the forming apparatus and is mixed in with the water that is on top of the support plate, forms and rings. That produces a dispersion of the microfibrous quartz in water at a concentration of about 1 g./l., and the suspension is mixed until it appears to be evenly dispersed, which may take from 5 to 30 seconds.

To deposit the microfibrous quartz on the forms the stopper at the bottom of the drain pipe is removed and the liquid medium is allowed to drain from the apparatus, leaving behind evenly deposited microfibrous quartz on the forms. The drain rate may be controlled by means of a valve or by partial removal of the stopper, or by other means, such as a pump. Normally drainage to :he point wherein the liquid is below the support plate will take 1 to 10 minutes and in this run it takes about 2 or 3 minutes.

After draining of the liquid medium from the part of the forming apparatus above the support plate such plate assembly and the molded wet ashing containers on the screen forms are withdrawn from the forming chamber and are placed in vacuuming position atop a vacuum box, as illustrated in FIG. 6. Vacuum is applied, gradually at first, and then up to 300 mm. Hg, and such vacuum application at such higher vacuum lasts for one minute, during which time most of the loosely held water is removed and the microfibers become more intimately intertwined and strengthened.

The plate assembly, with the "green" containers on the forms thereof, is then placed in a 100°C. convection oven for five to ten minutes to drive off additional water and to stiffen the containers so that they may be removed from the forms without being damaged. After cooling to about room temperature the containers are separated from the screen forms by liftings of the annular rings. If desired, the container edges may be trimmed at this stage or such trimming, if any, may be delayed until after subsequent heating or until after sintering. The containers are next returned to the 100°C. convection oven and heating is continued until all water present in non-combined state has been removed, which takes 15 minutes.

The last step in the manufacturing process (except for possible trimming thereafter) is the high temperature heating operation, in which the containers are cured or sintered to permanent form retaining state. In such operation the containers are heated (or fired) in a furnace (muffle furnace or microwave heated furnace, with the latter being preferred) to a temperature of 1,000°C., at which temperature they are held for 10 minutes, after which they are allowed to cool to room temperature.

The finished products are ashing containers that are particularly suitable for uses in microwave ashing operations, especially for analytical processes, such as flour, plastics, coal, fuels, atomic wastes, sewage sludge and foods analyses. The containers made are 2 mm. thick and that thickness is remarkably uniform over the side and bottom walls. The side and bottom walls join in a rounded or filleted joint so no sharp lines or seams are present to be lines of weakness that would tend to cause strains that could result in breakage during uses, especially multiple uses.

The ashing containers made can be employed and are employed in analytical ashings like those described in U.S. patent 4,565,669 and in U.S. patent applications 07/298,553 and 07/298,554, and in a U.S. patent application of Robert N. Revesz, entitled Heat Resistant and Light Weight Container for Materials to be Ashed, and Process for Manufacture Thereof, which is being filed on the same day as this application. Such patent and applications, and the Manville Tempstran bulletin, previously mentioned, are hereby incorporated in this application by reference. In the ashing operations described the containers are desirably porous and air permeable so that when volatile liquids are present with the material being ashed, as in flour analyses when ethanol is present with magnesium acetate and the flour sample, flamings off of the alcohol can be conducted in the asking furnace during the ashing operation, and do not have to be effected separately to avoid objectionable combustions, during which sample can be lost. Also, air flows to the analytical samples are such that complete ashings and oxidations are effected, without pockets of unoxidized and unashed sample being found in the container.

EXAMPLE 2

In variations of the invented process, instead of utilizing the Manville Tempstran 106-Q microfibrous quartz there is substituted for it Manville Tempstran 90-Q, 100-Q and 108-Q microfibrous quartzes, which are of nominal diameters of 0.26, 0.32 and 2.00 microns in diameter, respectively. The resulting ashing containers are form retaining, gas permeable, heat resistant to 1,000°C., and capable of being used repeatedly.

EXAMPLE 3

In variations of the procedures of Examples 1 and 2, instead of utilizing 1 g./l. of microfibrous quartz in the aqueous medium to be applied to the forms, when the concentration is raised to 1.5 g./l. the ashing containers made are of a thickness of about 3 mm. Similarly, when the concentration of the microfibrous quartz in the medium is 2 g./l. the wall and bottom thicknesses of the containers made will be about 4 mm. All such containers perform satisfactorily as ashing containers in both muffle furnaces and microwave heated furnaces.

EXAMPLE 4

Although the invention is primarily intended to be employed to make ashing containers for use at high furnace temperatures, in the range of 800 to 1,000°C. or so, it is also possible to employ it for the manufacture of containers for materials to be heated to lower temperatures, such as 400 to 500°C. For such applications one may often employ glass microfibers, such as those of borosilicate glass, which correspond to the Manville Tempstran glasses coded 90, 100, 106 and 108. When such borosilicate microfibers are employed instead of the corresponding quartz microfibers the products made are of essentially the same physical properties except for the lack of as good a high temperature stability as that of the quartz counterparts. Because the glass softening and sintering temperatures are lower for the borosilicate glasses they may be sintered at lower temperatures, often in the range of 400 to 600°C., so the sintering temperature ranges employable may be from 400 to as high as 1,200°C.

EXAMPLE 5

When the apparatus sizes are varied within the ranges given in the specification and the process steps are varied within the limits mentioned therein useful ashing containers of the types described are also manufactured. However, care should be taken to maintain the conditions within the ranges mentioned for best results. The ashing containers produced resist deterioration at 1,000°C. when the microfibrous material is quartz and such containers can be repeatedly used for ashings at 1,000°C. without developing holes in the walls thereof and without cracking or falling apart.

The invented processes are efficient, less labor intensive than the processes described in U.S. patent application S.N. 07/298,553, and produce products that are capable of multiple uses without damage. They are seamless in construction, of uniform wall and bottom thicknesses and no sharp lines of division separate portions of the containers, so they are uniform in properties and do not include overthick or stressed areas that can cause early failures of the containers. Because of the uniformity of internal wall thickness the ash does not tend to collect at a seam or other projection on the wall or bottom, which collecting could insulate the material to be ashed, thereby sometimes preventing complete oxidation and ashing thereof. Because of the employment of pure quartz and water in the preferred processes, wherein a microfibrous quartz container is made, there is no other material present, such as a flux or cement, which could be decomposed at the high temperatures of ashings and could adversely affect the analytical results obtained (by giving false weight losses or flase weights). The ashing containers made are very light in weight so they heat and cool more readily than competitive containers, such as those made of porcelain. Because the containers are lighter, weighings of samples and ash tend to be more accurate because the weights of such are not "overwhelmed" by the greater weights of the conventional containers.

The invention has been described with respect to illustrations and examples thereof but it is not to be limited to those because one of skill in the art with the present specification before him/her will be able to utilize substitutes arid equivalents without departing from the invention and the scopes of the claims.

Claims

1. A process for manufacturing ashing containers, useful in ashing of analytic samples, which containers are heat resistant, form retaining, walled, light in weight and porous, which comprises depositing quartz or borosilicate glass microfibers on a form of a shape like the desired container, heating such microfibers to a sintering temperature, at which they become sintered together to form such a form retaining container, and cooling the container.

2. A process according to claim 1 wherein the microfibers are suspended in a liquid medium, deposited on a shaped foraminous form from the liquid medium by passing the medium through the form, leaving the microfibers on the form, together with some of the liquid medium, such liquid medium is removed from the microfibers on the form, the shaped microfibrous container is removed from the form, and the microfibers of the container are sintered to produce a form retaining container.

3. A process according to claim 2 wherein the microfibers are quartz microfibers.

4. A process according to claim 3 wherein the quartz microfibers are suspended in water above the shaped foraminous form, after which the water is drawn downwardly through the form, leaving the quartz microfibers on the form, water remaining on the formed quartz microfibrous container is removed therefrom by application of heat thereto, the shaped container resulting is removed from the form and the container is sintered to produce a form retaining ashing container.

5. A process according to claim 4 wherein the foraminous form is perimetrically flanged, a matching continuous flange covers such form flange, which facilitates removal of the container from the form, after the formed, unsintered container is dried, and such formed, unsintered container is separated from the form by lifting of the continuous flange.

6. A process according to claim 5 wherein the ashing container is of substantially flat cylindrical shape, the flanged foraminous form is of screen material, the form is mounted on a support which is communicable with a source of vacuum, so that water remaining on the container after formation thereof but before sintering of the container to form retaining condition may be removed by vacuum, the support is communicated with the source of vacuum to remove water from the container, while the container is still on the form, the container is heated to remove any remaining water, the container is removed from the form by lifting the matching continuous flange and separating it and the container from the form and the support, and the container is sintered.

7. A process according to claim 6 wherein the support supports a plurality of screen forms for making a plurality of ashing containers at a time, the deposition of the quartz microfibers is onto a plurality of the screen forms from an aqueous dispersion of the quartz microfibers, vacuum is applied to the plurality of formed, unsintered containers at the same time, while they are on the support, heat is applied to them when they are on the support, the containers are removed from the forms and the support by liftings of the matching continuous flanges, and the containers are further dried by heating and are sintered to final form retaining state.

8. A process according to claim 7 wherein the support is a plate with drain openings therein for draining water from be quartz microfiber suspension, and for communicating the supported forms with a source of vacuum, to assist in removing water from them.

9. A process according to claim 8 wherein the screen form is supported against collapse during the depositing of the quartz microfibers on it by a packing material which has passageways through it through which water may pass to the drain openings in the support plate.

10. A process according to any preceding claim wherein the microfibers are of an average diameter in the range of 0.2 to 7 microns, the walled container is of wall and bottom thicknesses in the range of 0.2 to 5 mm., and the sintering is effected at a temperature in the range of 400 to 1,200°C.

11. A process according to any one of claims 3 to 9 wherein the quartz microfibers are of an average diameter in the range of 0.2 to 7 microns, the walled container is of wall and bottom thicknesses the the range of 0.2 to 5 mm., and the sintering is effected at a temperature in the range of 800 to 1,000°C.

12. A process for manufacturing containers that are useful for holding materials while they are being heated, which containers are form retaining, walled, light in weight and porous, which comprises depositing glass microfibers on a form of a shape like the desired container, heating such microfibers to a sintering temperature, at which they become sintered together to form such a form retaining container, and cooling the container.

_FIG. 1_

FIG.4

FIG.2

FIG. 3

FIG.5

FIG.6